# EUROPEAN PATENT APPLICATION

(11) **EP 2 629 579 A1**
(43) Date of publication of application: **21.08.2013**
(21) Application number: 13155822.3
(22) Date of filing: 19.02.2013
(51) Int. Cl.: H04W 72/04

(54) **System and Method for Managing Traffic in a Mobile Communication Network**

(30) Priority: 20.02.2012 ES 201230257
(71) Applicant: Vodafone Intellectual Property Licensing Limited, Newbury, Berkshire RG14 2FN (GB); Vodafone España, S.A.U., 28108 Alcobendas (ES)
(72) Inventor: Gomez Coloma, Alberto, 28108 Alcobendas (ES); Anaya Chamorro, Luis Manuel, 28108 Alcobendas (ES); Exadaktylos, Kyriakos, 28108 Alcobendas (ES); Guemes Cabrejas, Inigo, 28108 Alcobendas (ES); Valerdi Rodriguez, David Segundo, 28108 Alcobendas (ES)
(74) Representative: Ferrara, Simone

(57) **Abstract**

The invention relates to a system and method for managing traffic in a mobile communication network. The system of the invention comprises at least two base stations (BTS1, BTS2) comprising their respective time slots (TS) synchronised and being configured to provide the same radio frequency channel (f1), said radio frequency channel (f1) comprising: at least a first time slot (TS0) for transmitting a first logical Broadcast Control Channel being associated to the first base station (BTS1), at least a second time slot (TS2) for transmitting a second logical Broadcast Control Channel being associated to the second base station (BTS2) and a plurality of shared time slots (TS1, TS3 to TS7) configured for allocating traffic information, wherein the first base station (BTS1) is operative to allocate a terminal (TM1) at least one available time slot (TS3) of the shared time slots (TS1, TS3 to TS7).

## Description

### FIELD OF THE INVENTION

The invention relates to mobile communication networks, especially to a system and a method for managing traffic in a mobile communication network. It also relates to a computer program product comprising instructions needed for performing said method.

### BACKGROUND ART

In mobile communication systems resources are restricted: resources such as bandwidth, frequencies, time slots (i.e. short time windows) and codes which are shared by a plurality of terminals, either mobile or static, are all limited to some degree.

GSM is one of the most successful mobile telecommunications network technologies. Even in mature markets where other network technologies, for example UMTS, are widely spread, the majority of voice traffic is still handled by GSM networks, mainly due to its better coverage.

However, this scenario is already changing and will significantly change in the future due to the main following facts:
- 900 MHz and 1800 MHz refarming will enable UMTS and LTE to use these bands currently associated with the GSM technologies alone. Most operators are currently deploying UMTS 900 MHz across their networks and have plans for LTE 1800 MHz.
- A Smart Phone explosion is being experienced in most of the markets, the terminals ecosystem being rapidly transformed by the increase of more advanced handsets. Furthermore, many more UMTS 900MHz capable handsets are being produced.
- The increasing number of Machine to Machine (M2M) terminals deployed. These terminals usually making use of GPRS (GSM data technology).

The above facts imply a gradual decrease of traffic load in GSM networks ending up in a medium/long term scenario where low or even zero voice traffic will be handled by GSM Networks, while GSM data traffic contributor will be mainly M2M services. Since these services normally entail long term (e.g. beyond 2020) contracts between the operator and the customer, operators will be obliged to keep their GSM Networks active, at least, to cope with M2M services. The resulting traffic will consist of low load and very scattered and intermittent traffic profile.

However, traditional GSM Networks are designed to carry voice services under mobility scenarios and significant traffic loads. In GSM, the communication between a mobile terminal and a serving cell belonging to a base transceiver station or base station provides the mobile terminal with a radio frequency channel and all the mobile terminals attached to a same base transceiver station make use of the same frequency channels assigned to said base station. The provided radio frequency channel has a TDMA frame with eight time slots.

In terms of spectrum resources, GSM networks show two frequency layers:
- a BCCH frequency layer or Broadcast Control Channel layer which are those radio frequency channels where at least one time slot having system information messages that describe the identity, configuration and available features of the Base Station is configured; and
- a TCH frequency layer which are those radio frequency channels where only traffic and signalling information is configured.

At least one BCCH layer and its related frequency, is allocated to each cell. A TCH layer is also commonly used and provides capacity on top of the BCCH layer. But this kind of structure is not prepared to adapt resources utilization to scenarios of very low and scattered traffic, being quite inefficient due to the following main facts:
- as previously stated, a GSM network requires at least a layer of BCCH frequency bands from 12 to 18 frequencies, ie, 2,4 MHz to 3,6 MHz, under low density scenarios and more under high density ones.
- BCCH frequency channels are radiated at maximum power levels at all time slots because no power control is used, meaning unnecessary power resources utilization and energy consumption.

This means that a significant piece of the available spectrum plus high consumption of power resources would be unnecessarily used for the medium / long term traffic profile described above.

A GSM based solution that can handle these targeted scenarios by allocation of a small piece of spectrum and by not requiring continuous transmission is not currently known.

### SUMMARY OF THE INVENTION

This invention addresses the previously mentioned drawbacks by adapting the network traffic management functionality.

In the following discussion, it is assumed that the TCH layer can be removed entirely, since extra capacity is not needed for the traffic profile described above.

An object of the present invention is to provide a system and a method for managing traffic in a mobile communication network, reducing the capacity needs with respect to the radio spectrum and enhancing the efficiency of the use of the radio resources where traffic in a certain area is self managed in terms of spectrum and power resource allocation.

The system of the invention comprises a first base station and at least a second base station and it is operative for providing a communication between a terminal and any of the base stations, which provides said terminal with a radio frequency channel having an assigned timeframe structure comprising a plurality of time slots.

Moreover, the object of the invention is achieved by the first base station and the second base station comprising their respective time slots synchronised and being both configured to provide the same radio frequency channel, said channel comprising:
- at least a first time slot for transmitting a first logical Broadcast Control Channel being associated to the first base station,
- at least a second time slot for transmitting a second logical Broadcast Control Channel being associated to the second base station and
- a plurarity of shared time slots configured for allocating traffic information, wherein the first base station is operative to allocate said terminal at least one available time slot of the shared time slots.

Advantageously the system prevents the continuous radiation of power due to allocation, for each base station, of the logical Broadcast Control Channel to at least one time slot of the shared radio frequency channel. This means that every base station does not continuously transmit the pilot because it only does so during its corresponding time slot which results in a power consumption decrease and interference reduction, so another further advantage of the present invention is avoiding interference which diminishes the signal received by the mobile terminal or the base station.

Other time slots where logical Broadcast Control Channel (BCCH) have not been configured are used as a pool or shared time slots of resources for voice and data traffic (TCH) handling, so it is possible that radio spectrum capacities are dynamically shared between a plurality of base stations.

Advantageously the system may enable low spectrum utilization, for example, from 0.2 MHz in an extreme case to 1 MHz depending on traffic needs and to offer such radio spectrum capacity for mobile radio network functionality according to future needs. This means that a more efficient utilization of the infrastructure of mobile radio networks is possible, especially in those situations where low and scattered traffic occurs.

The shared time slots of the radio frequency channel may be used in a communication process with any of the base stations and only for one base station at any time, but in a first point of time any of these shared time slots can be used for a communication with the first base station and, when the first communication has been released, in a second point of time for another communication with the second base station.

In accordance with a further aspect of the invention there is provided a method for managing traffic in said described system of a mobile communication network, the method comprising the following steps performed in a first base station:
- transmitting the first logical Broadcast Control Channel in at least the first time slot of the radio frequency channel,
- receiving information from the second base station said information relating to:
   - the at least second time slot transmitting the second logical Broadcast Control Channel and
   - an allocated time slot of the shared time slots for transmitting traffic information of said radio frequency channel,
- identifying available time slots of said radio frequency channel,
- allocating said terminal one of the available slots of the radio frequency channel for transmitting traffic information.

In accordance with a yet another aspect of the invention there is provided a computer readable program code executable by a data processing system and configured to perform said method.

### BRIEF DESCRIPTION OF THE DRAWINGS

To complete the description and in order to provide for a better understanding of the invention, a set of drawings is provided. Said drawings form an integral part of the description and illustrate a preferred embodiment of the invention. The drawings comprise the following figures:
Figure 1 shows a schematic representation of a base station controller, a group of three base stations attached to said base station controller and two terminals attached to a corresponding base station.
Figure 2 shows schematically time slots and their use of the TDMA frames of radio frequency channels of a conventional prior art mobile GSM network of three serving cells belonging to three base stations.
Figure 3 shows a preferred embodiment of the invention showing schematically time slots and their use of the TDMA frames of a radio frequency channel of the mobile GSM network of three serving cells belonging to three base stations.

### DESCRIPTION OF PREFERRED EMBODIMENTS OF THE INVENTION

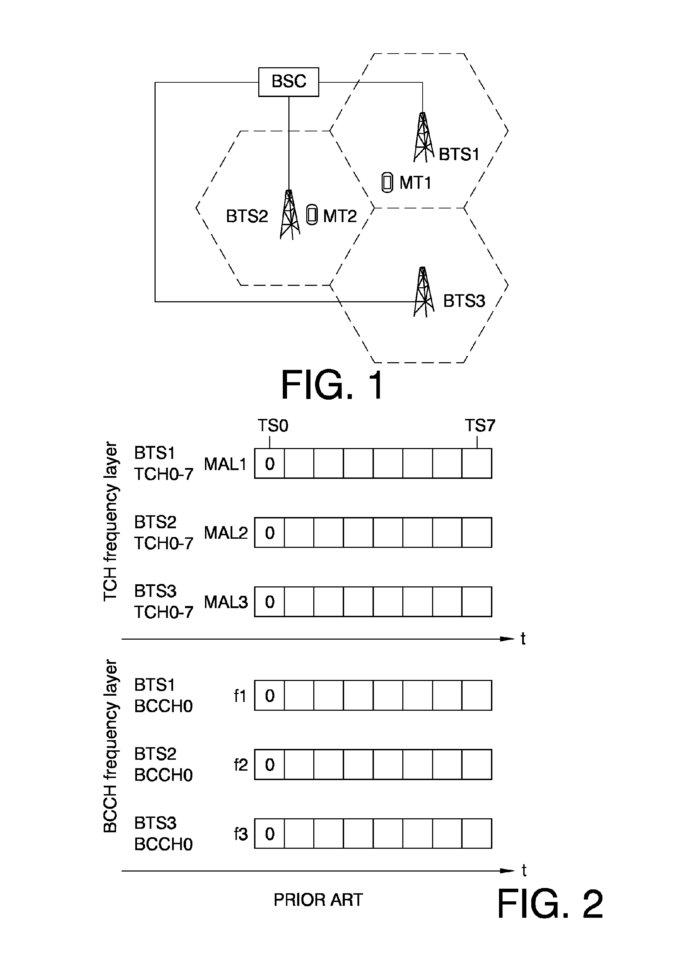

Figure 1 shows a schematic representation of a Base Station System of a network of a mobile communication. Said system comprises three base stations (BTS1, BTS2, BTS3) each comprising at least one cell. All the three base stations (BTS1, BTS2, BTS3) are attached to a base station controller (BSC).

The cell to which a terminal (MT1, MT2) is attached is called a serving cell. Each cell uses a channel to receive a corresponding signal, a channel is to be understood as a radio frequency range during a specific time (time slot).

Figure 1 also shows two mobile terminals (MT1, MT2) attached to respective base stations (BTS1, BTS2). A traffic channel has been established, ie, a voice or data call, between each mobile terminals (MT1, MT2) and their respective base stations (BTS1, BTS2). The traffic information can be real time traffic information or predictable traffic information coming from certain M2M terminals that has been scheduled for delivery at a predetermined time. The terminal can be a mobile terminal or a static terminal, as happens in machine to machine (M2M) communications.

Figure 2 shows a traditional GSM communication. The three base stations (BTS1, BTS2, BTS3) are configured for allocating three frequency channels (f1, f2, f3) for the BCCH layer. These frequencies where BCCH channels are allocated transmit at maximum output during all the time slots (TS0 to TS7). On top of BCCH layer, a TCH layer can be configured for capacity purposes. This layer does not work with fixed frequency channels, like BCCH one normally does, but with lists of frequency channels (Mobile Allocation List - MAL). An active call will continuously hop among the frequencies included in the list to reduce interference, a known process called frequency-hopping.

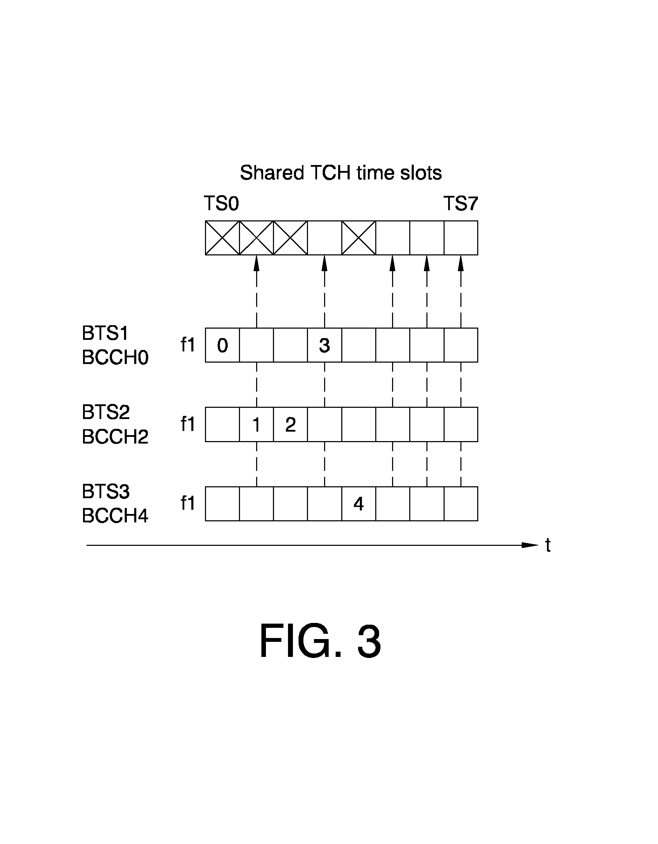

Figure 3 illustrates an implementation of the invention. Due to a synchronization of the time slots (TS) of the three base stations (BTS1, BTS2, BTS3) and to traffic management, deployment of a traffic or TCH layer different to the BCCH layer is not needed. Moreover all three base stations (BTS1, BTS2, BTS3) are configurable to provide the same frequency channel (f1). The embodiment shown in figure 3 is an extreme scenario where only one frequency channel (f1) is available, ie, 0.2 MHz according to the standard, the logical Broadcast Control Channels (BCCH) are configured in even time slots (TS0, TS2, TS4) of the available frequency channel (f1) and the odd time slots (TS) are shared assignable for traffic information.

As shown in figure 3, the radio frequency channel (f1) has at least a first time slot 0 (TS0) for transmitting a first logical Broadcast Control Channel (BCCH0) being associated to the first base station (BTS1), at least a second time slot (TS2) for transmitting a second logical Broadcast Control Channel (BCCH2) being associated to the second base station (BTS2), and at least a third time slot (TS4) for transmitting a third logical Broadcast Control Channel (BCCH4) being associated to the third base station (BTS3). It means that those time slots (TS) being different from the first (TS0), the second (TS2) and third time slots (TS4), ie, time slot 1 (TS1), time slot 3 (TS3), time slot 5 to time slot 7 (TS5 to TS7) are shared by all the three base stations (BTS1, BTS2, BTS3) and are configured for allocating traffic information to a terminal (TM) independently whether it is allocated to the first, the second or the third base station (BTS1, BTS2, BTS3).

In the shown example, the method comprises the step of providing the mobile terminal (MT1) one of said shared time slots (TS1, TS3, TS5 to TS7) taking also into account that the allocated time slot (TS) has not been previously allocated by one of the base stations (BTS1, BTS2, BTS3) to another terminal (MT2). If time slot 1 (TS1) was previously allocated to a second terminal (MT2) by the second base station (BTS2), the available time slots would be (TS3, TS5 to TS7). That means that the method also comprises steps for sharing information among the base stations (BTS).

The shared information, ie, available time slots (TS), can be handled by a centralised controller, for example, a base station controller (BSC) or responsibility can be decentralized across the base stations (BTS) for example through interfaces that interconnects the base stations (BTS), in a way that all base stations (BTS) are real time aware of the resources, ie, channels and frequencies, used by their neighbouring base stations (BTS). In this case each base station (BTS) is self managed and it exchanges information with the other base stations (BTS).

The method of the invention further comprises the step of setting the first base station (BTS1) for sending the information relating to the allocated time slot (TS3) and, if required, the step of sending the information relating to the released time slot (TS3) once the call is over.

In order to better understand the invention an example of a call assignment under the one frequency channel (f1) extreme scenario, in case that every base station (BTS) is real time aware of resources utilization by the others base stations (BTS), is included:
- a terminal (MT1) is camped on a corresponding cell of a BTS1 that has been allocated a first logical Broadcast Control Channel (BCCH0) on time slot 0 (TS0) on the available frequency channel (f1).
- this terminal (MT1) initiates a call, data or voice, in its corresponding cell base station (BTS1), following a known procedure sending the corresponding information to the first base station (BTS1) in the uplink,
- once the cell of the base station (BTS1) has received the call set up request, the traffic channel resources for the call are allocated. As mentioned above, every base station (BTS) is aware of the available resources in real time so it allocates the correct time slot (TS3).
- the base station (BTS1) informs the other base stations (BTS2, BTS3) about the allocated time slot (TS3).
- the base station (BTS1)informs the other base stations (BTS2, BTS3) about the release time slot (TS3) when the call is over.

One way of considering the mechanism described above is that of a "pooling" mechanism. For example, when a time slot of the shared time slots is allocated to a terminal/base station pair, this time slot cannot be used by other terminal/base station pairs until the call is released and this time slot has become available for re-allocation. Therefore, a time slot of the shared time slots would be used alternatively by different terminal/base station pairs. However, this alternative use would not be in a periodic or planned manner, but on a first-come-first-served basis (i.e., as a pool). In other words, a time slot of the shared time slots is "pooled" between different terminal/base station pairs. In an alternative scenario, the time slot of the shared time slots might be assigned to a specific terminal/base station pair for (i) a period of one or more frames or (ii) until the call is released, whichever is earlier.

Some of the advantages of the present invention are:
(a) the ability to provide GSM service over the smallest possible portion of spectrum: just a mere 200 KHz. Currently, in order to provide GSM service with acceptable performance, around 4,4 MHz are required - namely 22 times over the spectrum required by a mechanism implemented according to the present invention;
(b) the power consumption of the system would be reduced to a fraction (at least 1/8) of the power consumption of a standard GSM system with only BCCH carriers used;
(c) a mechanism implemented in accordance with the present invention would be totally transparent for the terminals, that is, compatible with any legacy GSM terminal. Thus, GSM service does not need to be discontinued or altered;
(d) it can be implemented over legacy Base Stations/Controllers just through software upgrade, i.e. it will not require further modifications and/or investments in GSM hardware. Therefore, a mechanism implemented in accordance with the present invention would enable smooth adaptation of GSM systems to an expected traffic decline, moving from a voice-centric network to a "M2M"-centric one in a transparent way for the users of the network.

Although an embodiment of the invention has been described above, further applications of, and modifications to, the present invention will be readily apparent to the appropriately skilled person from the teaching herein without departing from the scope of the appended claims. For example, a "terminal/base station pair" might include an arrangement whereby a terminal is served by one or more base stations.

## Claims

1. A system for managing traffic in a mobile communication network, said system comprising:
a first base station (BTS1), and
at least a second base station (BTS2),
the system being operative for providing a communication between a terminal (MT1) and the first base station (BTS1) which provides said terminal (MT1) with a radio frequency channel (f1) having an assigned timeframe structure comprising a plurality of time slots (TS),
**characterised in that**
the first base station (BTS1) and the second base station (BTS2) comprising their respective time slots (TS) synchronised and configured to provide the same radio frequency channel (f1), said radio frequency channel (f1) comprising:
- at least a first time slot (TS0) for transmitting a first logical Broadcast Control Channel (BCCH0) being associated to the first base station (BTS1),
- at least a second time slot (TS2) for transmitting a second logical Broadcast Control Channel (BCCH2) being associated to the second base station (BTS2) and
- a plurality of shared time slots (TS1, TS3 to TS7) configured for allocating traffic information,
wherein the first base station (BTS1) is operative to allocate said terminal (MT1) at least one available time slot (TS3) of the shared time slots (TS1, TS3 to TS7).

2. The system according to claim 1, further comprising at least a third base station (BTS3) configured to provide the same radio frequency channel (f1) as the first base station (BTS1) and the second base station (BTS2), wherein:
the respective time slots (TS) of the three base stations (BTS1, BTS2, BTS3) are synchronised,
the at least three base stations (BTS1, BTS2, BTS3) have a plurality of shared time slots (TS1, TS3, TS5 to TS7) configured for allocating traffic information,
the radio frequency channel (f1) has at least a third time slot (TS4) for transmitting a third logical Broadcast Control Channel (BCCH4) being associated to the third base station (BTS3).

3. The system according to either claim 1 or 2, wherein the time slots (TS) transmitting a logical Broadcast Control Channel (BCCH) are even time slots (TS0, TS2, TS4).

4. The system according to any one of the previous claims wherein the mobile communication network is a GSM Network.

5. The system according to claim 4 wherein the time frame structure is a TDMA frame comprising eight time slots (TS0 to TS7).

6. A method for managing traffic in a system of a mobile communication network as described in claim 1 comprising the following steps performed in the first base station (BTS1):
transmitting the first logical Broadcast Control Channel (BCCH0) in at least the first time slot (TS0) of the radio frequency channel (f1),
receiving information from the second base station (BTS2) said information relating to:
the at least second time slot (TS2) transmitting the second logical Broadcast Control Channel (BCCH2) and
an allocated time slot (TS1) of the shared time slots (TS1, TS3 to TS7) for transmitting traffic information of said radio frequency channel (f1),
identifying available time slots (TS3 to TS7) of said radio frequency channel (f1),
allocating said terminal (MT1) one of the available time slots (TS3 to TS7) of the radio frequency channel (f1) for transmitting traffic information.

7. The method according to claim 6 further comprising the step of the first base station (BTS1) informing of the allocated time slot (TS3) to the second base station (BTS2).

8. The method according to claim 6 further comprising the step of the first base station (BTS1) informing of a released time slot (TS3) to the second base station (BTS2).

9. The method according to any one of claims from 6 to 8, wherein the communication between the first and the second base station (BTS1, BTS2) is made through a base station controller (BSC).

10. Computer program comprising a computer readable program code executable by a data processing system configured to perform a method according to claims 6 to 9.
